Europäisches Patentamt

European Patent Office

Office européen des brevets

(11) Publication number: 0 401 982
A2

# EUROPEAN PATENT APPLICATION

(21) Application number: 90305126.6

(22) Date of filing: 11.05.90

(51) Int. Cl.⁵: B60N 2/00, A47C 7/18

(30) Priority: 08.06.89 US 363483

(43) Date of publication of application:
12.12.90 Bulletin 90/50

(84) Designated Contracting States:
AT BE CH DE DK ES FR GB GR IT LI LU NL SE

(71) Applicant: HOOVER UNIVERSAL, INC.
825, Victors Way
Ann Arbor Michigan 48104(US)

(72) Inventor: Witzke, Duane William
505 Crestview
Adrian, Michigan 49221(US)

(74) Representative: Williams, Trevor John et al
J.A. KEMP & CO. 14 South Square Gray's Inn
London WC1R 5LX(GB)

(54) Vehicle seat with blow moulded cover and method of making the same.

(57) A vehicle seat with a blow molded cover and a method of making the same is provided. The seat cover comprises a unitary piece of blow moldable plastic which is hollow and has an open end with front and back sides corresponding to a predetermined desired shape. The cover is formed by extruding a parison of blow moldable plastic material within a blow mold. The parison is then expanded into conformity with the blow mold. The mold is then opened and the seat cover is removed. The seat cover is inverted and a formed shaped body member is adhered to the inner surface of the seat cover. The seat cover and shaped body member are then re-inverted to form the vehicle seat.

FIG. 1

## BACKGROUND OF THE INVENTION

This invention relates generally to vehicle seats, and more particularly concerns vehicle seating wherein seat covers are required which can be manufactured in large quantities at low cost and with a broad range of styling possibilities.

Automotive seat covers are commonly made from a material which provides the adequate durability and texture required by consumers. The procedure for assembling these seats whether made from plastic, leather, cloth or the like is similar to the assembly of standard cut material seats. During this procedure, patterns are cut and the cut pieces are sewn together to form the seat cover, which also includes various tiedowns and assorted attachments. This cut and sew process requires a considerably amount of labor and a 15-25% material loss during the operation. Hence, there is a real need for a seat cover that does not require cutting or sewing.

The principal object of this invention, therefore, is to provide a blow molded seat cover with nearly unlimited graining and design contours, which can be manufactured without sewing and cutting waste. Additionally, the blow molding process provides an opportunity to utilize high-performance thermoplastics such as polyurethane and the like. Through utilization of the higher performance polymers, any cloth backing requirement can be eliminated and, in turn, reduce the manufacturing costs.

## SUMMARY OF THE INVENTION

The article of this invention consists of a unitary seat cover member comprising a generally hollow envelope-like member having an open end, a closed end, an inner side and an outer side. The seat cover member is formed by expanding a parison of blow moldable plastic material within a blow mold cavity having the desired shape of the seat cover. The plastic material is preferably made of a thermoplastic elastomer, such as polyurethane, and can consist of a single layer or a plurality of layers with different properties. A shaped foam pad having a surface corresponding in shape to the predetermined shape to which the cover has been formed is then secured by suitable adhesive to the inner side of the seat cover at a position opposite the portion of the outer side that is of the same predetermined shape. The seat cover is then turned inside out so as to enclose the foam pad, forming the desired seat structure.

By virtue of the blow molding technique and the pad and cover assembly, the process of this invention can readily be repeated with the quality assurance necessary in high production industries.

## BRIEF DESCRIPTION OF THE DRAWINGS

Other objects and advantages of the invention will become apparent upon reading the following detailed description and upon reference to the drawings in which:

Fig. 1 is a perspective view of a blow mold showing the blow mold cavity and the extruded parison;

Fig. 2 is a perspective view of the open mold and completed seat cover;

Fig. 3 is a perspective view of the seat cover in the process of being turned inside out;

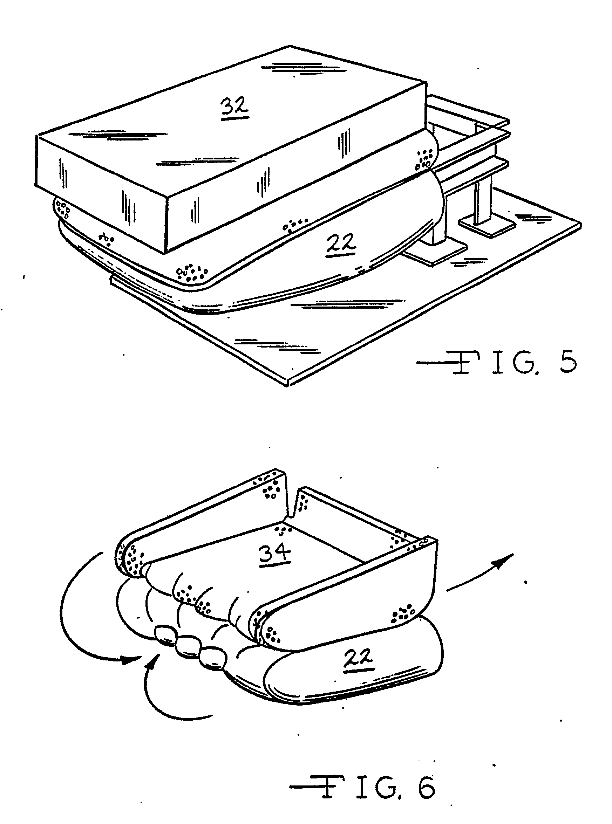

Fig. 4 is a perspective view of the seat cover placed on the forming tool with the shaped body member being aligned with the cover;

Fig. 5 is a perspective view of the assembly of the seat cover and shaped body member;

Fig. 6 is a perspective view of the seat cover being turned right side out with the shaped body member attached;

Fig. 7 is a perspective view of the seat cover with the shaped body member disposed therein;

Fig. 8 is a cross-sectional view, as seen from substantially the line 8-8 in Fig. 1, of one embodiment of the parison used in forming the seat cover of this invention;

Fig. 9 is a cross-sectional view of a second embodiment of the parison; and

Fig. 10 is a cross-sectional view of a further embodiment of the parison.

## DETAILED DESCRIPTION OF THE PREFERRED EMBODIMENT

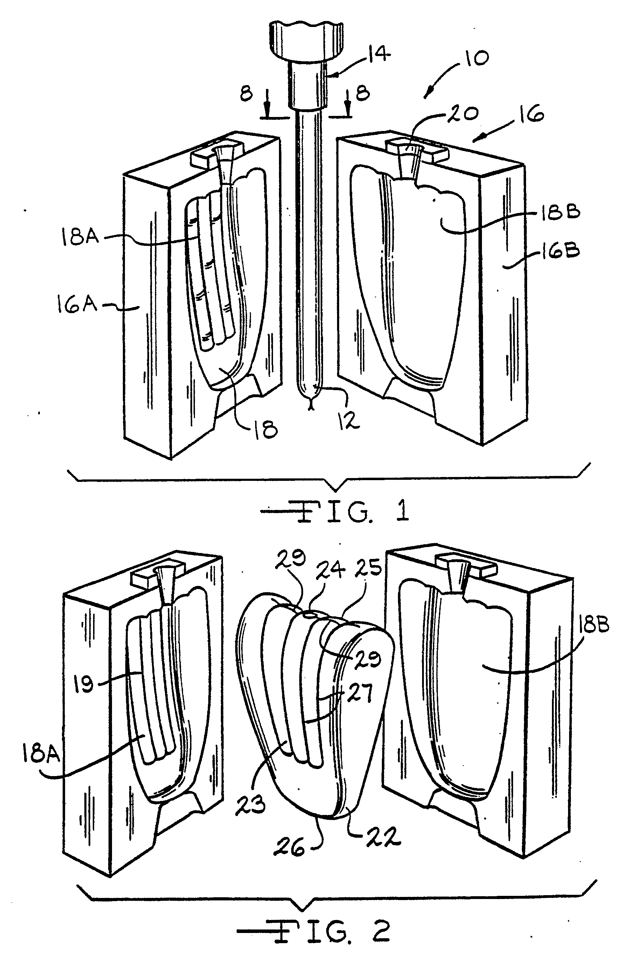

With reference to the drawings, Fig. 1 shows blow molding apparatus, generally designated 10, suitable for forming the seat cover of this invention. The apparatus 10 consists of an extrusion head and blow pipe assembly 14 for forming a parison 12 of suitable plastic material. The apparatus 10 also includes a blow mold 16 having two sections 16B and 16B. The mold 16 has a cavity 18 disposed therein corresponding to the desired shape of the seat cover 22, and formed by cavity halves 18A and 18B in the mold halves 16A and 16B. The mold 16 further has an opening 20 which surrounds the upper end of the parison 12 when the parison is enclosed within the cavity 18. When the mold 16 is closed around the parison 12, the assembly 14 cooperates with the upper end of the mold 16, at the opening 20, to server the parison 12 and provide for the flow of blow air under pressure into the upper end of the parison 12.

When the mold 16 is closed, blow air expands the parison 12 into conformity with the cavity 18. Once this procedure is completed, the mold 16 is opened and the seat cover 22 is removed.

Fig. 2 shows the end result of this process whereby a seat cover 22 is produced comprising a unitary piece of plastic material with a shaped front portion 23 corresponding to the cavity section 18A, a shaped back portion 25 corresponding to cavity 18B and an opening 24 corresponding to the opening 20 in the mold 16. It should be noted that since the plastic material takes on the shape of cavity 18, details in the seat cover, such as stitching or leather grain, may be included in the surface of the cavity 18. In the preferred embodiment, the cavity section 18A has a contoured surface 19 which gives the seat cover 22 the appearance of having hand stitched design lines 27 extending vertically in the front surface.

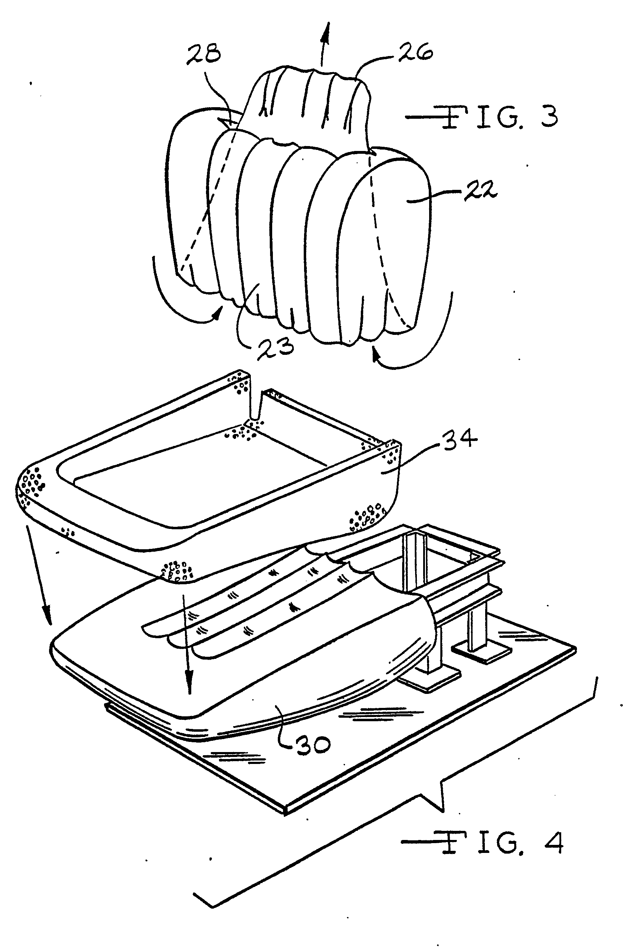

The plastic material used to make the seat cover 22 can be any blow moldable material. In one embodiment, a thermoplastic polyurethane elastomer is used to form the seat cover 22 because of its high degree of flexibility and resistance to abrasion, but any high performance polymer will suffice. Fig. 3 depicts the seat cover 22 in the process of being inverted. This is accomplished by first slitting the cover 22 along the line 29 at the lower end of the cover so as to form an open ended envelope. The upper end portion 26 of the seat cover 22 is then pulled through the opening 28 at the lower end of the cover 22 formed by cutting along the line 29.

Once the seat cover 22 is inverted, the seat cover 22 is telescoped, open end first, over a cantilever supported forming tool 30. In one embodiment, the forming tool 30 is shaped to provide a desired contour to conform to the shape of the seat cover 22. A fixture 32 (Fig. 5) is then lowered towards the seat cover member 22 on the forming tool 30 with a shaped body member 34, which has been molded to the desired shape of the seat structure and has been sprayed with an adhesive on the underside facing the seat cover 22.

In one embodiment, the shaped body member 34 comprises a molded foam pad which has a surface that is shaped complementary to the shape of the front portion 23 of the seat cover 22 and the forming tool 30. The fixture 32 is utilized to apply heat and pressure to the pad to assure its firm adherence to the inner side of the front portion 23 of the seat cover 22 following which the fixture 32 is removed from the assembly. The seat cover 22 and the adhered body member 34 are then moved lengthwise off the cantilevered end of the forming tool 30.

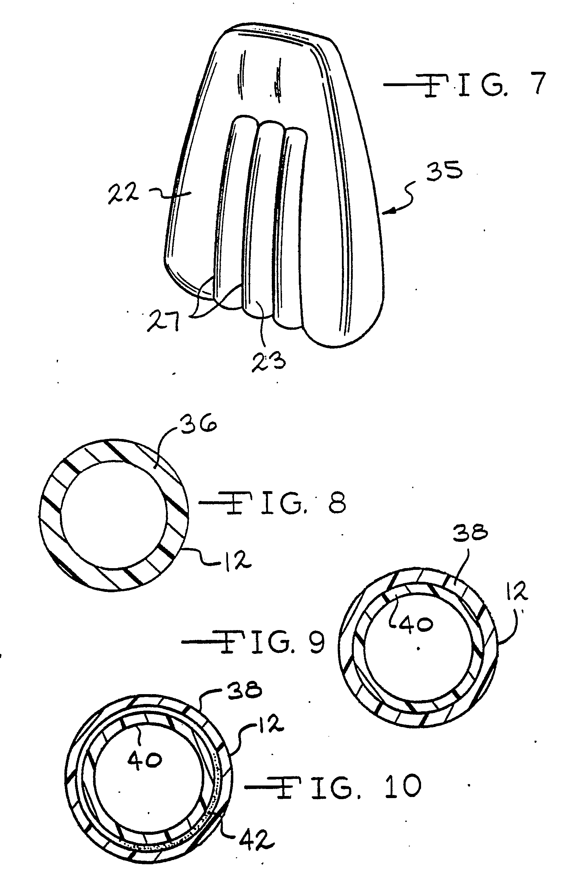

The shaped body member 34 is of a size to be enclosed within the seat cover 22 and as a result the seat cover 22 can now be turned right side out so as to completely enclose the body member 34 therein, as shown in Fig. 6. The resulting seat back assembly 35, as shown in Fig 7, can be readily attached to a frame or similar means for supporting the seat structure.

Fig. 8 illustrates that the parison 12 consists of a single layer 36 of a plastic material, preferably a thermoplastic elastomer or other high performance polymer. Fig. 9 is a cross-sectional view of another embodiment of the parison 12, wherein the parison 12 is of multi-layer construction, having two layers of different blow moldable plastic materials, with the outer layer 38 being softer than the inner layer 40. This construction provides the resulting seat cover with a softer outer surface fo the user while the inner layer provides the seat cover 22 with the requisite strength and toughness. A third embodiment is shown in Fig 10 wherein a third layer of adhesive 42 is placed between the layers 38 and 40 to bond the layers 38 and 40 together.

A plastic material consisting principally of nylon will provide a good outer layer 38 and a low density polyethylene will provide a suitable inner layer 40. A urethane based plastic can also be used as the layer 38 and modified PET, vinyl and PVC can be used as the structural layer 40.

Thus it is apparent that there has been provided, in accordance with the present invention, a vehicle seat with a blow molded cover and a method of making the same that truly satisfies the objects, aims and advantages set forth above. While the invention has been described in conjunction with specific embodiments thereof, it is evident that many alternatives, modifications and variations will be apparent to those skilled in the art of the foregoing description. Accordingly, it is intended to embrace all such alternatives, modifications and variations as fall within the spirit of the broad scope of the appended claims.

## Claims

1. A vehicle seat structure comprising a unitary seat cover member enclosing a shaped body member having a front side corresponding substantially to the desired shape of said seat structure.

2. The seat structure of Claim 1, wherein said unitary seat cover member comprises a hollow envelope member having an open end and front and back sides corresponding substantially to the desired shape of said seat structure.

3. The seat structure of Claim 1, wherein said shaped body comprises a molded foam pad having a front side corresponding substantially to the desired shape of said seat structure.

4. The seat structure of Claim 1, wherein said cover member is formed of a blow molded plastic, said blow molded plastic being sufficiently pliable to enable said cover member to be turned inside out to facilitate assembly with said shaped body to form said seat structure.

5. The seat structure of Claim 1, wherein said front side of said shaped body member is adhered to said front side of said seat cover member during assembly.

6. A method of forming a seat cover member comprising the steps of:

a) extruding a parison of blow moldable plastic material;

b) enclosing said parison in a blow mold cavity of the desired shape of said seat cover member; and

c) expanding said parison into conformity with said cavity.

7. The method of Claim 6, wherein said blow moldable plastic material comprises a thermoplastic elastomer.

8. The method of Claim 6, wherein said plastic material comprises a thermoplastic polyurethane elastomer.

9. The method of Claim 6, wherein said parison of blow moldable plastic material comprises a single layer of said plastic material.

10. The method of Claim 6, wherein said parison of blow moldable plastic comprises two or more layers of plastic material, said layers having different material properties.

11. The method of Claim 10, wherein said parison of blow moldable plastic has an adhesive layer located between said layers of said plastics.

12. The method of making a seat structure comprising the steps of:

a) blow molding a plastic material to form a seat cover member of unitary hollow construction having inner and outer sides of a predetermined shape and an open end, said plastic material being sufficiently pliable to enable said seat cover member to be turned inside out.

b) molding a foam pad having at least a portion of its surface a predetermined shape;

c) turning said cover member inside out so that said inner side is on the outside of said cover member;

d) positioning said foam pad on said cover member so that said portion of the surface of said pad having said predetermined shape is adjacent to said inner side and in complementary relation to the shape of said inner side of said cover member having said predetermined shape;

e) adhering said portion of said pad to said complementary shaped inner side of said cover member at a position opposite said shaped portion of said outer side; and

f) manipulating said cover so that said outer side is on the outside of said cover and said pad is enclosed therein.

13. In a vehicle seat structure having a shaped body with a front side and corresponding substantially to the desired shape of said seat structure, a unitary seat cover member comprising a hollow member having a front side, a back side and an open end, said cover member being formed of a blow molded plastic and being sufficiently pliable to enable it to be turned inside out to facilitate assembly with said body to form said structure, said shaped body being entirely enclosed within said cover member in said assembly, and said front side of said body member being adhered to said front side of the cover member and being of said desired shape.

FIG. 1

FIG. 2

FIG. 3

FIG. 4

FIG. 5

FIG. 6

FIG. 7

FIG. 8

FIG. 9

FIG. 10